# EUROPEAN PATENT SPECIFICATION

(11) **EP 3 929 236 B1**
(45) Date of publication and mention of the grant of the patent: **20.12.2023**
(21) Application number: 21180811.8
(22) Date of filing: 22.06.2021
(51) Int. Cl.: C08J 3/12, C08J 3/20, C08J 3/03, C08K 3/08, A01N 59/16

(54) **A METHOD OF PRODUCING A NANOCOMPOSITE COMPRISING SILVER NANOPARTICLES AND RELATED PRODUCTS**
VERFAHREN ZUR HERSTELLUNG EINES NANOKOMPOSITS MIT SILBERNANOPARTIKELN UND VERWANDTE PRODUKTE
PROCÉDÉ DE PRODUCTION D'UN NANOCOMPOSITE CONTENANT DES NANOPARTICULES D'ARGENT ET PRODUITS ASSOCIÉS

(30) Priority: 26.06.2020 IT 202000015478
(43) Date of publication of application: 29.12.2021
(73) Proprietor: Terzi, Luciano, 21050 Gorla Minore (VA) (IT)
(72) Inventor: Terzi, Luciano, 21050 Gorla Minore (VA) (IT)
(74) Representative: Freyria Fava, Cristina

(56) References cited:
- DATABASE WPI Week 201867 2018 Thomson Scientific, London, GB; AN 2018-66814U XP002802110, & CN 108 410 141 A (ZHEJIANG ZHONGDI TEXTILE NEW MATERIAL) 17 August 2018 (2018-08-17)
- DATABASE WPI Week 201742 2017 Thomson Scientific, London, GB; AN 2017-31456B XP002802111, & CN 106 622 322 A (UNIV HENAN POLYTECHNIC) 10 May 2017 (2017-05-10)
- OLIANI WASHINGTON LUIZ ET AL: "Development of a nanocomposite of polypropylene with biocide action from silver nanoparticles", JOURNAL OF APPLIED POLYMER SCIENCE, vol. 132, no. 29, 5 August 2015 (2015-08-05), pages n/a-n/a, XP055776010, US ISSN: 0021-8995, DOI: 10.1002/app.42218
- GABRIEL MOLINA DE OLYVEIRA ET AL: "Novel LDPE/EVA Nanocomposites with Silver/Titanium Dioxide Particles for Biomedical Applications", JOURNAL OF MATERIALS SCIENCE AND ENGINEERING B, vol. 1, no. 9, 28 September 2011 (2011-09-28), pages 516-522, XP055776053, ISSN: 2161-6221, DOI: 10.17265/2161-6221/2011.09.016

## Description

### FIELD OF THE INVENTION

The present description relates to a method of producing a nanocomposite comprising silver nanoparticles, and related products.

### BACKGROUND OF THE INVENTION

The design, development and applications of nanomaterials are among the main objects of nanotechnology. Nowadays, nanotechnologies are applied in various disciplines, such as biotechnology, biomedicine, molecular medicine, pharmacology, toxicology, electronics, agriculture, veterinary science and food science.

Among the nanomaterials that have aroused greater interest in recent years are undoubtedly nanocomposites, or rather, nanomaterials wherein a polymeric matrix includes particles of nanometric dimensions dispersed within it. The reduction of the size of these particles to the nanoscale confers new physical, chemical and biological properties to the polymeric matrix that comprises them, without however altering the original structural properties of said matrix. In this way, nanocomposites are obtained, wherein - in addition to the original properties of the polymeric matrix - there are new functional properties that depend on various parameters, for example, the amount of charge of the nanoparticles included in the matrix, the surface/weight ratio and the ratio between the total number of atoms and the surface of the structure (Nanocomposites Based on Polyolefins and Functional Thermoplastic Materials. Polymer International, 2008, 57, 805-836).

Of all the nanocomposites, those comprising silver nanoparticles (AgNPs) have recently achieved considerable scientific and technical application interest. Indeed, one of the main applications of nanocomposites comprising AgNPs is their use for producing polymeric films with antimicrobial properties, which are conferred by the presence of silver. Such polymeric films are produced by mixing nanocomposites comprising silver nanoparticles with virgin polymers, so that the latter acquire antimicrobial properties. These nanocomposites are, therefore, considered to be among the most interesting commercial products in the nanomaterials group.

Despite the considerable interest aroused by the properties of AgNPs and the nanocomposites that comprise them, many doubts are still present in the scientific community about their reliability, due to the evidence of toxic properties that involve their use under controlled conditions. This is particularly relevant when the nanocomposites comprising AgNPs are used to produce polymeric films used for food packaging or for the packaging of materials and fluids intended to come into direct contact with humans, which must necessarily be free from microbial contamination. Food packaging should - in fact - protect the food product it contains from external contamination.

In recent years, new so-called "active packaging" techniques have been developed, wherein the quality and safety of the product contained in the packaging are guaranteed through the positive interaction between the packaging itself and the internal environment. One of the various applications of active packaging is antimicrobial packaging, which is a packaging capable of eliminating or inhibiting the growth of microorganisms that could contaminate the food product it contains. Recently, the use of antimicrobial polymeric films containing AgNPs, produced from nanocomposites comprising AgNPs that are mixed with one or more virgin polymers, has seen significant growth, by virtue of their broad spectrum antimicrobial activity and their stability at high temperatures (Food Packaging with Antibacterial Properties. Scientific Bullettin Series B, 2014, 76, 154-162).

There are several methods that are known in the art for obtaining the aforesaid polymeric films:
- lamination method: mixing of AgNPs into the melted polymer using a batch mixer (Brabender type);
- casting method: preparation of a suspension of AgNPs in polyethylene (PE) matrices by means of ultrasonic dispersion; the prepared suspension is then deposited on the surface of a polymeric film and the solvent is subsequently evaporated;
- spray method: preparation of a suspension of AgNPs in polyethylene (PE)-based matrices by means of an ultrasonic dispersion; the prepared suspension is subsequently sprayed on the surface of a PE film, with consequent evaporation of the residual solvent.

In a recent study, two composites (named PEN and PEC) containing AgNPs embedded in separate supports (silica or titanium dioxide) were mixed with low density polyethylene (LDPE) in different compositions and extruded to produce thin polymer films. These polymer films were characterized by scanning electron microscopy (SEM), X-ray diffraction (XRD), differential scanning calorimetry (DSC), thermogravimetric analysis (TGA) and Fourier transform infrared spectroscopy (FTIR) . Morphological analysis of the polymeric films showed the formation of agglomerates of nanoparticles both in the PEN matrix composites and in the PEC matrix composites. XRD analysis confirmed the presence of SiO₂ and TiO₂ in both composites. Thermal analysis indicated an increase in the thermal stability of the PEC-based composite. The antimicrobial activity was determined by placing the samples in contact with two bacterial strains, namely *Escherichia Coli* and *Staphylococcus Aureus,* in accordance with the Japanese Industrial Standard Method (JIS Z 2801: 2000). The polymeric films analyzed showed antimicrobial activity towards the two microorganisms tested, showing a greater activity towards the *S. Aureus* strain compared to the *E. Coli* strain. In the design of these polymeric films useful for use as packaging, however, the possible toxic effects for humans due to a release of AgNPs into the environment must be taken into consideration (Review of antimicrobial food packaging. Innovative Food Science & Emerging Technologies, 2002, 3, 113-126).

AgNPs effectively kill bacterial microorganisms and are, therefore, biocidal by definition. Many scientists are still dubious about the safety of AgNPs. In any case, thanks to their very high surface area and reactivity, AgNPs are already used in everyday products that require broad spectrum antimicrobial performance.

As already stated above, methods for producing nanocomposites and polymeric films comprising AgNPs are already known and used in the art.

For example, the document US 2008/0213328 A1 describes a plastic material for storage that comprises antibacterial granules, containing AgNPs, mixed with plastics. The antibacterial granules containing AgNPs are produced by means of a process comprising the steps of: 1) cutting the stem of the *Juncus Effusus L.* into sections; 2) immersing the cut section into a solution containing AgNPs to allow adsorption of the particles onto the cut stem; 3) after adsorption, washing with hot and cold water; 4) drying the stem section on which the AgNPs have been adsorbed; 5) grinding the stem section containing AgNPs to a size suitable for producing the aforesaid AgNPs-containing antibacterial granules.

A further example is described in WO 2012/051373 A2, which describes a method for producing a material containing one or more antimicrobial materials, comprising the steps of: 1) preparing a dispersion comprising a fluorinated polymer, a fiber-reinforcing polymer, one or more antimicrobial agents, and a solvent; 2) subjecting the dispersion to electrospinning to obtain a precursor; 3) heating the precursor obtained to a temperature and for a time sufficient to remove the solvent and the fiber-reinforcing polymer, in order to obtain the material.

Other methods for producing nanocomposites comprising silver particles are described in CN 108410141, CN 106622322; polymeric films comprising silver particles are also known from the scientific publications Journal of Applied Polymer Science (2015), 132(29):42218 and Journal of Materials Science and Engineering B (2011), 1(9) :516-522.

Among the polymers that could be used as matrices for nanocomposites, polypropylene (PP) and poly(ethylene vinyl acetate) (poly-EVA) are of particular interest. Poly-EVA is a copolymer of ethylene and vinyl acetate, while PP is a polymer of propylene. These polymers are particularly interesting as they are used in many applications.

For example, poly-EVA is used as a sealant in food packaging, hot melt adhesive, insulation for electrical cables and protective material in the construction of photovoltaic panels. Thanks to its excellent elastic properties, poly-EVA is also used for producing soles for sports shoes and in the form of expanded foam for producing padding and bearings for sports equipment, and in biomedical engineering for producing drug carriers. In another example, films based on blends of polypropylene and modified polypropylene with insertion of silver nanoparticles have been described (Development of a nanocomposite of polypropylene with biocide action from silver nanoparticles, Oliani et al., J. Appl. Polym. Sci., 2015, vol.132, n°29).

In light of the numerous applications of these polymers, there is a need to develop methods for producing antimicrobial nanocomposites based on PP and antimicrobial nanocomposites based on poly-EVA that are practical, economical and efficient, and which are better than methods already known and used.

### OBJECT AND SUMMARY OF THE INVENTION

One object of the present invention is to provide a method for producing a nanocomposite comprising silver nanoparticles having antimicrobial activity, wherein the polymeric matrix of the nanocomposite is based on a compound selected from polypropylene and poly(ethylene vinyl acetate).

A further object of the present invention is to provide a method for producing a nanocomposite of the type indicated above wherein the yield of incorporation of silver nanoparticles is increased.

A further object of the present invention is to provide a method for producing a nanocomposite of the type indicated above which is economical and simple to produce.

According to the invention, the aforesaid objects are achieved thanks to the object specifically indicated in the following claims, which are to be understood as an integral part of the present description.

An embodiment of the present description relates to a method of producing a nanocomposite based on a compound selected from polypropylene and poly(ethylene vinyl acetate) and comprising silver nanoparticles, the method comprising the steps of:
(a) preparing a stabilizing solution of a stabilizing agent in aqueous solvent, wherein the stabilizing agent is polyvinylpyrrolidone having formula (III) :

   (C₆H₉NO)ₙ (III)

   wherein n is an integer comprised between 20 and 20,000;
(b) adding a compound selected from polypropylene and poly(ethylene vinyl acetate) to the stabilizing solution prepared in step (a), obtaining a first suspension;
(c) preparing a solution of a silver precursor in aqueous solvent;
(d) adding the solution prepared in step (c) to the first suspension obtained in step (b), obtaining a second suspension;
(e) preparing a reducing solution of a reducing agent, preferably sodium borohydride, in aqueous solvent;
(f) adding the reducing solution prepared in step (e) to the second suspension obtained in step (d), so as to obtain a mixture wherein silver nanoparticles are generated by means of a reduction reaction of the silver precursor;
(g) conducting a thermal treatment for removing the aqueous solvent from the mixture obtained in step (f), obtaining a nanocomposite powder based on a compound selected from polypropylene and poly(ethylene vinyl acetate) and comprising silver nanoparticles,
wherein the silver nanoparticles obtained in step (f) have an equivalent spherical diameter comprised between about 5 nm and 500 nm, wherein the equivalent spherical particle diameter was determined by scanning electron microscopy.

The method subject of the present description allows obtainment of a nanocomposite based on a compound selected from polypropylene and poly(ethylene vinyl acetate) and comprising silver nanoparticles having antimicrobial activity thanks to the presence of silver, and from which the release of silver nanoparticles in the external environment is substantially nil.

Producing silver nanoparticles directly in the reactor containing the polymeric matrix, i.e. the compound selected from polypropylene and poly(ethylene vinyl acetate), allows the use of a sufficiently low quantity of stabilizing agent to obtain a substantially pure nanocomposite, guaranteeing at the same time the stability of the silver nanoparticles during the synthesis step and during the evaporation step of the aqueous solvent from the mixture obtained in step (f).

The nanocomposite obtained with the method subject of the present invention may also be mixed with one or more virgin polymers to produce polymeric films having antimicrobial activity.

### DETAILED DESCRIPTION OF THE INVENTION

In the following description, numerous specific details are provided to allow a thorough understanding of embodiments. The embodiments may be implemented in practice without one or more of the specific details, or with other methods, components, materials, etc. In other cases, well-known structures, materials or operations are not shown or described in detail to avoid confusing certain aspects of the embodiments.

Reference throughout the present disclosure to "one embodiment" or "an embodiment" indicates that a particular aspect, structure or characteristic described with reference to the embodiment is included in at least one embodiment. Thus, forms of the expressions "in one embodiment" or "in an embodiment" at various points throughout the present description are not necessarily all referring to the same embodiment. Moreover, the particular functions, structures or characteristics may be combined in any suitable way in one or more embodiments.

The headings/titles provided herein are for convenience only and do not interpret the scope or meaning of the embodiments of the invention.

The term "nanocomposite" in the way it is used in the present description refers to a polymeric matrix within which a plurality of particles having dimensions in the order of nanometers are dispersed.

The term "silver precursor" as used in the present description refers to a compound comprising at least one silver atom which, following a reduction reaction with a reducing agent, preferably sodium borohydride, generates silver nanoparticles. Preferably, the silver precursor used in the method subject of the present description is selected from silver oxide and silver nitrate.

The term "virgin polymer" as used in the present description refers to a polymer that does not comprise silver nanoparticles.

The term "polymeric film" in the way it is used in the present description refers to a film that is produced by mixing the nanocomposite comprising silver nanoparticles obtained using the method of the present description with one or more virgin polymers. Preferably, the thickness of the polymeric film produced is comprised between 10 µm and 250 µm. Preferably, the virgin polymer or virgin polymers with which the nanocomposite comprising silver nanoparticles obtained with the method subject of the present description is mixed are selected from polypropylene (PP), polyvinyl chloride (PVC), polylactic acid (PLA), poly(ethylene vinyl acetate) (poly-EVA), polyvinyl alcohol (PVA), polyethylene terephthalate (PET).

In an embodiment, the present invention is relative to a method of producing a nanocomposite based on a compound selected from polypropylene and poly(ethylene vinyl acetate) and comprising silver nanoparticles, the method comprising the steps of:
(a) preparing a stabilizing solution of a stabilizing agent in aqueous solvent, wherein the stabilizing agent is polyvinylpyrrolidone having formula (III) :

   (C₆H₉NO)ₙ (III)

   wherein n is an integer comprised between 20 and 20,000;
(b) adding a compound selected from polypropylene and poly(ethylene vinyl acetate) to the stabilizing solution prepared in step (a), obtaining a first suspension;
(c) preparing a solution of a silver precursor in aqueous solvent;
(d) adding the solution prepared in step (c) to the first suspension obtained in step (b), obtaining as such a second suspension;
(e) preparing a reducing solution of a reducing agent, preferably sodium borohydride, in aqueous solvent;
(f) adding the reducing solution prepared in step (e) to the second suspension obtained in step (d), so as to obtain a mixture wherein silver nanoparticles are generated by means of a reduction reaction of the silver precursor;
(g) conducting a thermal treatment for removing the aqueous solvent from the mixture obtained in step (f), obtaining a powder of nanocomposite based on a compound selected from polypropylene and poly(ethylene vinyl acetate) and comprising silver nanoparticles,
wherein the silver nanoparticles obtained in step (f) have an equivalent spherical diameter comprised between about 5 nm and 500 nm, wherein the equivalent spherical particle diameter was determined by scanning electron microscopy.

The nanocomposite thus obtained has antimicrobial activity, preferably antibacterial, thanks to the presence of silver.

Preferably the aqueous solvent used in steps (a), (c) and (e) is water, more preferably deionized water.

It is to be understood that the expression "nanocomposite based on a compound selected from polypropylene and poly(ethylene vinyl acetate)" means a nanocomposite whose polymeric matrix comprises, preferably consists of, a compound selected from polypropylene and poly(ethylene vinyl acetate).

In one embodiment, the amount of stabilizing agent is comprised between 0.1% by weight and about 5% by weight, preferably between 0.2% by weight and about 1% by weight, with respect to the total weight of the mixture obtained in the step (f). In the preferred embodiment, the amount of stabilizing agent is equal to about 0.5% by weight with respect to the total weight of the mixture obtained in step (f).

In one embodiment, the amount of the compound selected from polypropylene and poly(ethylene vinyl acetate) is between 10% by weight and about 80% by weight, preferably between 40% by weight and about 60% by weight, with respect to the total weight of the mixture obtained in step (f). In the preferred embodiment, the amount of the compound selected from polypropylene and poly(ethylene vinyl acetate) is equal to approximately 50% by weight with respect to the total weight of the mixture obtained in step (f).

In one embodiment, the amount of silver precursor ranges from 0.01% by weight to about 0.50% by weight, preferably from 0.02% by weight to about 0.10% by weight, with respect to the total weight of the mixture obtained in step (f). In the preferred embodiment, the quantity of silver precursor is equal to about 0.04% by weight with respect to the total weight of the mixture obtained in step (f).

In a preferred embodiment, the reducing agent is sodium borohydride, where the amount of sodium borohydride is between about 5 ppm and about 100 ppm, preferably between about 20 ppm and about 50 ppm, with respect to the total weight of the mixture obtained in step (f). In the most preferred embodiment, the quantity of sodium borohydride is equal to about 34 ppm with respect to the total weight of the mixture obtained in step (f). It is to be understood that the term "sodium borohydride" indicates the compound having the chemical formula NaBH₄. This compound may also be indicated with the terms "sodium borohydride" and "sodium tetrahydroborate".

In one embodiment, the silver nanoparticles generated in step (f) have an equivalent spherical diameter between about 20 nm and 100 nm.

In discussing these values it is understood that, as per common practice, a small amount of silver nanoparticles with an equivalent spherical diameter not between 5 nm and 500 nm could be present in a sample of silver nanoparticles generated in step (f). However, most of the silver nanoparticles generated in step (f) have an equivalent spherical diameter between 5 nm and 500 nm. Preferably at least 80%, more preferably at least 90%, of silver nanoparticles generated in step (f) have an equivalent spherical diameter between 5 nm and 500 nm.

The values used here to define the dimensional ranges of the equivalent spherical diameter of the silver nanoparticles generated in step (f) were obtained from morphological analysis by scanning electron microscopy of the nanocomposite obtained by means of the method subject of the present invention. Scanning electron microscopy analyzes were conducted using a FEI Inspect^{®} F50 field emission source microscope. It follows that the values indicated in the present description for delimiting the dimensional ranges of the equivalent spherical diameter of the silver nanoparticles can vary in the case wherein different methods for determining the equivalent spherical diameter of nanoparticles are used.

In one embodiment, the heat treatment of step (g) is carried out at a temperature between about 40°C and 70°C, for a time between 2 hours and 8 hours. In the preferred embodiment, the thermal treatment of step (g) is carried out at a temperature equal to about 55°C, for a time equal to about 4 hours.

The thermal treatment of step (g) allows the removal of the aqueous solvent from the mixture obtained in step (f) and obtaining a nanocomposite powder based on a compound selected from polypropylene and poly(ethylene vinyl acetate), and comprising silver nanoparticles.

In the preferred embodiment, the thermal treatment of step (g) is carried out using an apparatus as illustrated below. This apparatus has a stainless steel casing comprising a plurality of scraping blades which, thanks to a counter-rotating movement with respect to the casing, keep the mixture obtained in step (f) stirred, which is inserted inside the casing and maintained in the same conditions of temperature and time indicated above.

Advantageously, the stirring of the mixture obtained in step (f) during the thermal treatment of step (g) allows obtaining a homogeneous dispersion in the compound selected from polypropylene and poly(ethylene vinyl acetate) of the silver nanoparticles produced and, at the same time, facilitates the removal of the aqueous solvent from the mixture to obtain a nanocomposite powder. As will be explained in more detail later in the present description, evaporation of the aqueous solvent increases the concentration of the silver precursor which has not yet reacted, thus increasing its conversion into silver nanoparticles. The result is an increase in the overall quantity of silver in the nanocomposite, whereby the antimicrobial activity is enhanced.

In one embodiment, the silver precursor is selected from silver oxide and silver nitrate. It is to be understood that the term "silver oxide" indicates the compound having the chemical formula Ag₂O, and the term "silver nitrate" indicates the compound having the chemical formula AgNO₃, which can also be indicated with the term "trioxonitrate of silver".

In one embodiment, the compound which is added in step (b) to the stabilizing solution prepared in step (a) is poly(ethylene vinyl acetate) having formula (I):

(C₂H₄)ₐ(C₄H₆O₂)_{b} (I)

wherein:
- a is an integer comprised between 10 and 5,000.
- b is an integer comprised between 100 and 20,000.

Preferably, the poly(ethylene vinyl acetate) of formula (I) comprises an overall amount of vinyl acetate higher than the overall amount of ethylene. More preferably, in the poly(ethylene vinyl acetate) of formula (I), a is an integer equal to 80 and b is an integer equal to 200.

Preferably, the poly(ethylene vinyl acetate) has a molecular weight comprised between 10,000 Da and 500,000 Da. More preferably, the poly(ethylene vinyl acetate) has a molecular weight equal to 100,000 Da.

In one embodiment, the compound which is added in step (b) to the stabilizing solution prepared in step (a) is polypropylene having formula (II):

(C₃H₆)ᵣ (II)

wherein r is an integer comprised between 20 and 100,000.

In the preferred embodiment of the polypropylene of formula (II), r is an integer between 10,000 and 100,000.

In one embodiment, the polypropylene has a molecular weight between 10 and 50,000 Da. In the preferred embodiment, the polypropylene has a molecular weight of 20,000 Da.

In one embodiment, the stabilizing agent of step (a) is polyvinylpyrrolidone having formula (III):

(C₆H₉NO)ₙ (III)

wherein n is an integer equal to 360.

In one embodiment, the polyvinylpyrrolidone has a molecular weight between 2,500 Da and 200,000 Da. In the preferred embodiment, the polyvinylpyrrolidone has a molecular weight of 40,000 Da.

The present description also discloses a polypropylene-based nanocomposite comprising silver nanoparticles obtained by means of the manufacturing method described above, in any of its embodiments. The nanocomposite has antimicrobial activity, preferably antibacterial, thanks to the presence of silver.

The present description also discloses a poly(ethylene vinyl acetate)-based nanocomposite comprising silver nanoparticles obtainable by means of the manufacturing method described above, in any of its embodiments. The nanocomposite has antimicrobial activity, preferably antibacterial, thanks to the presence of silver.

The nanocomposite comprises silver in an amount of between about 1 ppm and about 6 ppm, preferably between about 2 ppm and about 6 ppm, with respect to the total weight of the nanocomposite. In the preferred embodiment, the nanocomposite comprises silver in an amount equal to approximately 4 ppm with respect to the total weight of the nanocomposite.

The present description also discloses a polymeric film having antimicrobial activity and comprising (a) a polymeric matrix based on at least one virgin polymer and (b) a nanocomposite based on a compound selected from polypropylene and poly(ethylene vinyl acetate), and comprising silver nanoparticles obtained by the method of production described above in any of its embodiments.

It is to be understood that the expression "polymeric matrix based on at least one virgin polymer" means a polymeric matrix comprising, preferably consisting of, at least one virgin polymer.

The at least one virgin polymer is selected from polypropylene (PP), polyvinyl chloride (PVC), polylactic acid (PLA), poly(ethylene vinyl acetate) (poly-EVA), polyvinyl alcohol (PVA) and polyethylene terephthalate (PET). In the preferred embodiment, the at least one virgin polymer is selected from polypropylene (PP) and poly(ethylene vinyl acetate) (poly-EVA).

The polymeric film having antimicrobial activity, preferably antibacterial activity, including the nanocomposite based on a compound selected from polypropylene and poly(ethylene vinyl acetate) and comprising silver nanoparticles made by means of the manufacturing method described above, is produced by implementing the following steps:
(i) granulating a quantity of nanocomposite powder based on a compound selected from polypropylene and poly(ethylene vinyl acetate) and comprising silver nanoparticles, obtaining a granulate;
(ii) weighing a quantity of virgin polymer;
(iii) weighing a quantity of granulate obtained in step (i) comprised between 0.5% by weight and 5% by weight with respect to the quantity of virgin polymer weighed in step (ii);
(iv) joining the granulate weighed in step (iii) to the virgin polymer weighed in step (ii), obtaining a mixture;
(v) heating the mixture obtained in step (iv) to a temperature between 110°C and 200°C, obtaining a melted mixture wherein the nanocomposite based on a compound selected from polypropylene and poly(ethylene vinyl acetate) and comprising silver nanoparticles is incorporated into the molten virgin polymer;
(vi) extruding the melted mixture obtained in step (v), obtaining a polymeric film having antimicrobial activity, preferably antibacterial activity.

It is to be understood that the granulation of the nanocomposite powder based on a compound selected from polypropylene and poly(ethylene vinyl acetate) and comprising silver nanoparticles carried out in step (i) may be carried out using any powder granulation method known in the art.

The quantity of nanocomposite granulate that is weighed in step (iii) and added to the virgin polymer in step (iv) is comprised between 1% by weight and about 5% by weight with respect to the quantity of virgin polymer weighed in step (ii).

The quantity of nanocomposite granulate that is weighed in step (iii) and added to the virgin polymer in step (iv) is equal to about 2% by weight with respect to the quantity of virgin polymer weighed in step (ii).

When the at least one virgin polymer is polypropylene, the heating of step (v) is carried out in a machine Mod. TECOM with a 30 mm screw. This machine comprises a screw pump and a heating cylinder compressing inside. The nanocomposite granulate and the polypropylene are fed into the machine and pass into the heating cylinder, where the mixture is melted and compressed to allow the nanocomposite to be dispersed into the polypropylene. The melted mass is then extruded outside the machine in the form of a polypropylene polymeric film having antimicrobial activity, preferably antibacterial activity.

It is to be understood that the polymeric film having antimicrobial activity thus produced can be used for different purposes and applications.

The polymeric film having antimicrobial activity, including the nanocomposite based on a compound selected from polypropylene (PP) and poly(ethylene vinyl acetate) (poly-EVA) and comprising silver nanoparticles is used as a packaging material food, in particular flexible packaging for the packaging of food in the fresh food sector, such as single-dose sachets, resealable bags, easy-opening bags, flexible plastic film, film for wrapping and film for coupled products.

The method subject of the present invention has numerous advantages.

In particular, selecting a polymeric matrix based on a compound selected from PP and poly-EVA for the nanocomposite produced by the method subject of the present invention is extremely convenient from the application point of view. Indeed, the many advantages of PP and poly-EVA include low-cost, excellent elasticity, flexibility and mechanical resistance, excellent adhesion to various substrates that are both polar and non-polar, and high resistance to chemicals and light. In addition to that, PP and poly-EVA are resistant to fungi and bacteria, hypoallergenic and nontoxic. Furthermore, PP and poly-EVA have the advantage of having a marked compatibility with a high number of different virgin polymers, so that the nanocomposite based on a compound selected from PP and poly-EVA and comprising silver nanoparticles made by means of the method subject of the present description may be used to produce a wide range of antimicrobial polymeric films.

A further advantage of the method subject of the present invention lies in the production of silver nanoparticles directly in the reactor containing the polymeric matrix of the nanocomposite, i.e. the compound selected from PP and poly-EVA. This allows obtainment of an intimate and homogeneous dispersion of the silver nanoparticles within the polymeric matrix of the nanocomposite. The risk of release of silver from the nanocomposite and, consequently, from the polymeric film formed by mixing the nanocomposite with one or more virgin polymers is therefore minimized. This is useful, for example, when the polymer film comprising the nanocomposite is used as a food packaging material, as it reduces the risk of silver being released from the polymeric film towards the food product contained in the packaging, which could cause toxicity problems for the consumer.

Furthermore, the amount of stabilizing agent used in the method subject of the present invention is optimal. In particular, producing silver nanoparticles directly in the reactor containing the polymeric matrix of the nanocomposite allows the use of a reduced amount of stabilizing agent compared to methods wherein producing silver nanoparticles takes place in a separate reactor with respect to the reactor containing the polymeric matrix of the nanocomposite. Indeed, the silver nanoparticles are incorporated into the polymeric matrix of the nanocomposite immediately after being produced and, therefore, the risk of their aggregation into agglomerates is considerably reduced.

In known methods, on the contrary, the silver nanoparticles are first produced, and then added to the reactor containing the polymeric matrix of the nanocomposite. This implies that, in order to avoid the aggregation of silver nanoparticles, relatively large quantities of one or more stabilizing agents must be added to the reactors containing them, where they are stored before being added to the reactor containing the polymeric matrix in which they must be incorporated. This implies a more laborious process - and, therefore, more easily subject to errors - and a lower degree of purity of the nanocomposites produced, if compared with a nanocomposite made by means of the method subject of the present invention.

However, it is noted that it is still preferable to have a (low) quantity of stabilizing agent even when the silver nanoparticles are produced in the reactor containing the polymeric matrix in which they are to be incorporated, as in the case of the method subject of the present invention. Indeed, the use of a (low) quantity of stabilizing agent allows obtainment of silver nanoparticles having substantially homogeneous diameter values, allowing in fact a relatively small dimensional dispersion of the nanoparticles. This reduces the risk of forming agglomerates of silver nanoparticles, which are homogeneously dispersed in the polymeric matrix of the nanocomposite and, consequently, also in the polymeric film formed by mixing the nanocomposite with one or more virgin polymers. As a result, the antimicrobial activity of the polymeric film is homogeneous in every portion of the polymeric film, and the risk of having portions of the polymeric film wherein a silver concentrate is present, and other portions wherein silver is absent is reduced and at which, therefore, the antimicrobial activity is reduced.

The amount of stabilizing agent used by the present inventors is therefore optimal, being low enough to allow a substantially pure nanocomposite to be obtained, but still sufficient to ensure a stabilization of the diameter of the silver nanoparticles produced in the reactor containing the polymeric matrix.

In addition to this, it is observed that the thermal treatment carried out in step (g) to remove the aqueous solvent from the mixture obtained in step (f), in order to obtain a nanocomposite powder, is advantageous with respect to the methods known up to now, wherein the final step of the production method generally involves a filtration and/or centrifugation operation.

The present inventor has, in fact, surprisingly found that evaporating the aqueous solvent, if carried out in place of filtration and/or centrifugation, allows increasing the concentration of residual silver precursor, which has not been transformed into silver nanoparticles in step (f), thus increasing the respective reduction by the unreacted sodium borohydride. The result is an increase in the incorporation of silver into the polymeric matrix, which leads to a proportional increase in the antimicrobial activity of the nanocomposite produced. Therefore, the method subject of the present invention optimizes the quantity of silver precursor that is converted into silver nanoparticles, in other words, it increases the yield of the conversion reaction of the silver precursor into silver nanoparticles.

The dimensional stabilization of the diameter of the silver nanoparticles produced in step (f), by the stabilizing agent, and the increase in concentration of the silver precursor that has not yet reacted, by the evaporation thermal treatment of step (g), therefore have a synergistic effect in enhancing the antimicrobial activity of the nanocomposite.

The nanocomposite based on a compound selected from PP and poly-EVA and comprising silver nanoparticles made as described here is excellent for mixing with one or more virgin polymers in order to obtain a polymeric film that can be used, for example, such as packaging for food products. The polymeric film has antimicrobial activity, and the release of silver from it is substantially zero, thus minimizing the risk of toxicity for the consumer.

Below, a series of examples will be provided wherein embodiments of the present invention are described, which are not to be understood in a limiting sense, with the scope of protection defined by the following claims.

### Example 1 - production of a nanocomposite powder based on poly(ethylene vinyl acetate) and comprising silver nanoparticles

10 g of polyvinylpyrrolidone (PVP), with a molecular weight of 40,000 Da, is dissolved in 1 liter of deionized water and the solution thus obtained is introduced into a reactor and stirred. Then, 1,000 g of poly(ethylene vinyl acetate) is introduced into the reactor, obtaining a suspension. A volume of 78.4 ml of a 0.06 M AgNO₃ solution is then added to the suspension under stirring and, subsequently, 3.4 ml of a 0.53 M aBH₄ solution. The mixture thus obtained is left under stirring for about 30 minutes, then it is discharged from the reactor and inserted into an instrument having a stainless steel casing comprising a plurality of scraping blades, where it is kept under stirring thanks to a counter-rotating movement of the blades with respect to the casing, at a temperature of 55°C for a time equal to 4 hours. A nanocomposite powder is thus obtained based on poly(ethylene vinyl acetate) and comprising silver nanoparticles.

### Example 2 - production of a nanocomposite powder based on polypropylene and comprising silver nanoparticles

10 g of polyvinylpyrrolidone (PVP), with a molecular weight of 40,000 Da, is dissolved in 1 liter of deionized water and the solution thus obtained is introduced into a reactor and stirred. Then, 1,000 g of polypropylene is introduced into the reactor, obtaining a suspension. A volume of 78.4 ml of a 0.06 M AgNO₃ solution is then added to the suspension under stirring and, subsequently, 3.4 ml of a 0.53 M NaBH₄ solution. The mixture thus obtained is left under stirring for about 30 minutes, then it is discharged from the reactor and inserted into an instrument having a stainless steel casing comprising a plurality of scraping blades, where it is kept under stirring thanks to a counter-rotating movement of the blades with respect to the casing, at a temperature of 55°C for a time equal to 4 hours. A nanocomposite powder is thus obtained based on polypropylene and comprising silver nanoparticles.

### Example 3 - production of a polypropylene polymeric film having antimicrobial activity

An amount of nanocomposite comprising silver nanoparticles produced in accordance with Example 1 or in accordance with Example 2 is granulated. A quantity of the granulate thus obtained and a quantity of polypropylene are then weighed, so that the weighed quantity of nanocomposite granulate is equal to 2% by weight with respect to the weighed quantity of polypropylene.

These quantities are continuously fed into a machine Mod. TECOM with a 30 mm screw, so that at all times inside the machine the nanocomposite is always present in an amount equal to 2% by weight with respect to the amount of polypropylene.

In the machine, the nanocomposite and the polypropylene pass into a heating cylinder, where they are heated to a temperature of around 190°C. A melted mass is thus formed and the nanocomposite is incorporated into the molten polypropylene.

The resulting mixture is then extruded by the machine in the form of a polypropylene film in which the nanocomposite comprising silver nanoparticles is incorporated.

### Example 4 - production of a polylactic acid polymeric film having antimicrobial activity

An amount of nanocomposite comprising silver nanoparticles produced in accordance with Example 1 or in accordance with Example 2 is granulated. A quantity of the granulate thus obtained and a quantity of polylactic acid are then weighed, so that the weighed quantity of nanocomposite granulate is equal to 2% by weight with respect to the weighed quantity of polylactic acid.

These quantities are continuously inserted into an extrusion machine so that - at any time inside the machine - the nanocomposite is always present in an amount equal to 2% by weight with respect to the amount of polylactic acid.

In the machine, the nanocomposite and the polylactic acid pass into a heating cylinder, where they are heated to a temperature of around 160-170°C. A melted mass is thus formed and the nanocomposite is incorporated into the molten polylactic acid.

The resulting mixture is then extruded by the machine in the form of a polylactic acid film in which the nanocomposite comprising silver nanoparticles is incorporated.

### Example 5 - production of a polyvinyl chloride polymeric film having antimicrobial activity

An amount of nanocomposite comprising silver nanoparticles produced in accordance with Example 1 or in accordance with Example 2 is granulated. A quantity of the granulate thus obtained and a quantity of polyvinyl chloride are then weighed, so that the weighed quantity of nanocomposite granulate is equal to 2% by weight with respect to the weighed quantity of polyvinyl chloride.

These quantities are continuously inserted into an extrusion machine so that at any time inside the machine the nanocomposite is always present in an amount equal to 2% by weight with respect to the amount of polyvinyl chloride.

In the machine, the nanocomposite and the polyvinyl chloride pass into a heating cylinder, where they are heated to a temperature of around 190°C. A melted mass is thus formed and the nanocomposite is incorporated into the molten polyvinyl chloride.

The resulting mixture is then extruded by the machine in the form of a polyvinyl chloride film wherein the nanocomposite comprising silver nanoparticles is incorporated.

### Example 6 - production of a polyethylene terephthalate polymeric film having antimicrobial activity

An amount of nanocomposite comprising silver nanoparticles produced in accordance with Example 1 or in accordance with Example 2 is granulated. A quantity of the granulate thus obtained and a quantity of polyethylene terephthalate are then weighed, so that the weighed quantity of nanocomposite granulate is equal to 2% by weight with respect to the weighed quantity of polyethylene terephthalate.

These quantities are continuously inserted into an extrusion machine so that - at any time inside the machine - the nanocomposite is always present in an amount equal to 2% by weight with respect to the amount of polyethylene terephthalate.

In the machine, the nanocomposite and the polyethylene terephthalate pass into a heating cylinder, where they are heated to a temperature of around 160-170°C. A melted mass is thus formed and the nanocomposite is incorporated into the molten polyethylene terephthalate.

The resulting mixture is then extruded by the machine in the form of a polyethylene terephthalate film wherein the nanocomposite comprising silver nanoparticles is incorporated.

## Claims

1. A method of producing a nanocomposite based on a compound selected from polypropylene and poly(ethylene vinyl acetate) and comprising silver nanoparticles, the method comprising the steps of:
(a) preparing a stabilizing solution of a stabilizing agent in aqueous solvent, wherein the stabilizing agent is polyvinylpyrrolidone having formula (III) :
(C₆H₉NO)ₙ (III)
wherein n is an integer comprised between 20 and 20,000;
(b) adding a compound selected from polypropylene and poly(ethylene vinyl acetate) to the stabilizing solution prepared in step (a), obtaining a first suspension;
(c) preparing a solution of a silver precursor in aqueous solvent;
(d) adding the solution prepared in step (c) to the first suspension obtained in step (b), obtaining a second suspension;
(e) preparing a reducing solution of a reducing agent in aqueous solvent;
(f) adding the reducing solution prepared in step (e) to the second suspension obtained in step (d), so as to obtain a mixture wherein silver nanoparticles are generated by means of a reduction reaction of the silver precursor;
(g) conducting a thermal treatment for removing the aqueous solvent from the mixture obtained in step (f), obtaining a powder of nanocomposite based on a compound selected from polypropylene and poly(ethylene vinyl acetate) and comprising silver nanoparticles,
wherein the silver nanoparticles obtained in step (f) have an equivalent spherical diameter comprised between 5 nm and 500 nm, wherein the equivalent spherical particle diameter was determined according to the description.

2. A method according to claim 1, wherein the amount of stabilizing agent is comprised between 0.1% by weight and 5% by weight relative to the total weight of the mixture obtained in step (f).

3. A method according to claim 1 or 2, wherein the amount of the compound selected from polypropylene and poly(ethylene vinyl acetate) is comprised between 10% by weight and 80% by weight relative to the total weight of the mixture obtained in step (f).

4. A method according to any one of the preceding claims, wherein the amount of the silver precursor is comprised between 0.01% by weight and 0.50% by weight relative to the total weight of the mixture obtained in step (f).

5. A method according to any one of the preceding claims, wherein the reducing agent is sodium borohydride and wherein the amount of sodium borohydride is comprised between 5 ppm and 100 ppm relative to the total weight of the mixture obtained in step (f).

6. A method according to any one of the preceding claims, wherein the thermal treatment of step (g) is carried out at a temperature comprised between 40°C and 70°C, for a time comprised between 2 hours and 8 hours.

7. A method according to any one of the preceding claims, wherein the silver precursor is selected from silver oxide and silver nitrate.

8. A method according to any one of the preceding claims, wherein the compound added in step (b) to the stabilizing solution prepared in step (a) is poly(ethylene vinyl acetate) having formula (I):
(C₂H₄)ₐ(C₄H₆O₂)_{b} (I)
wherein:
- a is an integer comprised between 10 and 5,000, and
- b is an integer comprised between 100 and 20,000.

9. A method according to any one of claims 1 to 7, wherein the compound added in step (b) to the stabilizing solution prepared in step (a) is polypropylene having formula (II):
(C₃H₆)ᵣ (II)
wherein r is an integer comprised between 20 and 100,000.

## Patentansprüche

1. Verfahren zur Herstellung eines Nanokomposits auf der Basis einer Verbindung, die aus Polypropylen und Poly(ethylenvinylacetat) ausgewählt ist und Silbernanopartikel enthält, wobei das Verfahren die folgenden Schritte umfasst:
(a) Herstellen einer stabilisierenden Lösung eines Stabilisierungsmittels in einem wässrigen Lösungsmittel, wobei das Stabilisierungsmittel Polyvinylpyrrolidon mit der Formel (III) ist:
(C₆H₉NO)ₙ (III)
wobei n eine ganze Zahl zwischen 20 und 20.000 ist;
(b) Zugabe einer Verbindung, ausgewählt aus Polypropylen und Poly(ethylenvinylacetat), zu der in Schritt (a) hergestellten Stabilisierungslösung, wodurch eine erste Suspension erhalten wird;
(c) Herstellung einer Lösung eines Silbervorläufers in einem wässrigen Lösungsmittel;
(d) Zugabe der in Schritt (c) hergestellten Lösung zu der in Schritt (b) erhaltenen ersten Suspension, wodurch eine zweite Suspension erhalten wird;
(e) Herstellung einer reduzierenden Lösung eines Reduktionsmittels in einem wässrigen Lösungsmittel;
(f) Zugabe der in Schritt (e) hergestellten reduzierenden Lösung zu der in Schritt (d) erhaltenen zweiten Suspension, um eine Mischung zu erhalten, in der durch eine Reduktionsreaktion des Silbervorläufers Silbernanopartikel erzeugt werden;
(g) Durchführen einer thermischen Behandlung zum Entfernen des wässrigen Lösungsmittels aus der in Schritt (f) erhaltenen Mischung, wobei ein Pulver eines Nanokomposits auf Basis einer Verbindung, ausgewählt aus Polypropylen und Poly(ethylenvinylacetat), erhalten wird, das Silber-Nanopartikel umfasst, wobei die in Schritt (f) erhaltenen Silber-Nanopartikel einen äquivalenten sphärischen Durchmesser zwischen 5 nm und 500 nm aufweisen, wobei der äquivalente sphärische Partikeldurchmesser gemäß der Beschreibung bestimmt wurde.

2. Verfahren nach Anspruch 1, wobei die Menge des Stabilisierungsmittels zwischen 0,1 Gew.-% und 5 Gew.-%, bezogen auf das Gesamtgewicht der in Schritt (f) erhaltenen Mischung, liegt.

3. Verfahren nach Anspruch 1 oder 2, wobei die Menge der Verbindung, ausgewählt aus Polypropylen und Poly(ethylenvinylacetat), zwischen 10 Gew.-% und 80 Gew.-%, bezogen auf das Gesamtgewicht der in Schritt (f) erhaltenen Mischung, beträgt.

4. Verfahren nach einem der vorhergehenden Ansprüche, wobei die Menge des Silbervorläufers zwischen 0,01 Gew.-% und 0,50 Gew.-%, bezogen auf das Gesamtgewicht der in Schritt (f) erhaltenen Mischung, beträgt.

5. Verfahren nach einem der vorhergehenden Ansprüche, wobei das Reduktionsmittel Natriumborhydrid ist und wobei die Menge an Natriumborhydrid zwischen 5 ppm und 100 ppm, bezogen auf das Gesamtgewicht der in Schritt (f) erhaltenen Mischung, beträgt.

6. Verfahren nach einem der vorhergehenden Ansprüche, wobei die thermische Behandlung von Schritt (g) bei einer Temperatur zwischen 40°C und 70°C für eine Zeit zwischen 2 Stunden und 8 Stunden durchgeführt wird.

7. Verfahren nach einem der vorhergehenden Ansprüche, wobei der Silbervorläufer aus Silberoxid und Silbernitrat ausgewählt ist.

8. Verfahren nach einem der vorhergehenden Ansprüche, wobei die in Schritt (b) zu der in Schritt (a) hergestellten Stabilisierungslösung hinzugefügte Verbindung Poly(ethylenvinylacetat) mit der Formel (I) ist:
(C₂H₄)ₐ(C₄H₆O₂)_{b} (I)
wobei:
- a eine ganze Zahl zwischen 10 und 5.000 ist und
- b ist eine ganze Zahl zwischen 100 und 20.000.

9. Verfahren nach einem der Ansprüche 1 bis 7, wobei die in Schritt (b) zu der in Schritt (a) hergestellten Stabilisierungslösung hinzugefügte Verbindung Polypropylen der Formel (II) ist:
(C₃H₆)ᵣ (II)
wobei r eine ganze Zahl zwischen 20 und 100.000 ist.

## Revendications

1. Procédé de production d'un nanocomposite à base d'un composé choisi parmi le polypropylène et le poly(éthylène-acétate de vinyle) et comprenant des nanoparticules d'argent, le procédé comprenant les étapes de:
(a) préparation d'une solution stabilisante d'un agent stabilisant dans un solvant aqueux, dans lequel l'agent stabilisant est une polyvinylpyrrolidone ayant la formule (III):
(C₆H₉NO)ₙ (III)
dans laquelle n est un nombre entier compris entre 20 et 20000;
(b) addition d'un composé choisi parmi le polypropylène et le poly(éthylène-acétate de vinyle) à la solution stabilisante préparée dans l'étape (a), pour obtenir une première suspension;
(c) préparation d'une solution d'un précurseur d'argent dans un solvant aqueux;
(d) addition de la solution préparée dans l'étape (c) à la première suspension obtenue dans l'étape (b), pour obtenir une deuxième suspension;
(e) préparation d'une solution réductrice d'un agent réducteur dans un solvant aqueux;
(f) addition de la solution réductrice préparée dans l'étape (e) à la deuxième suspension obtenue dans l'étape (d), de manière à obtenir un mélange dans lequel des nanoparticules d'argent sont générées au moyen d'une réaction de réduction du précurseur d'argent;
(g) conduite d'un traitement thermique pour retirer le solvant aqueux du mélange obtenu dans l'étape (f), pour obtenir une poudre de nanocomposite à base d'un composé choisi parmi le polypropylène et le poly(éthylène-acétate de vinyle) et comprenant des nanoparticules d'argent,
dans lequel les nanoparticules d'argent obtenues dans l'étape (f) ont un diamètre sphérique équivalent compris entre 5 nm et 500 nm, dans lequel le diamètre de particule sphérique équivalent a été déterminé selon la description.

2. Procédé selon la revendication 1, dans lequel la quantité d'agent stabilisant est comprise entre 0,1 % en poids et 5 % en poids par rapport au poids total du mélange obtenu dans l'étape (f).

3. Procédé selon la revendication 1 ou 2, dans lequel la quantité du composé choisi parmi le polypropylène et le poly(éthylène-acétate de vinyle) est comprise entre 10 % en poids et 80 % en poids par rapport au poids total du mélange obtenu dans l'étape (f).

4. Procédé selon l'une quelconque des revendications précédentes, dans lequel la quantité du précurseur d'argent est comprise entre 0,01 % en poids et 0,50 % en poids par rapport au poids total du mélange obtenu dans l'étape (f).

5. Procédé selon l'une quelconque des revendications précédentes, dans lequel l'agent réducteur est le borohydrure de sodium et dans lequel la quantité de borohydrure de sodium est comprise entre 5 ppm et 100 ppm par rapport au poids total du mélange obtenu dans l'étape (f).

6. Procédé selon l'une quelconque des revendications précédentes, dans lequel le traitement thermique de l'étape (g) est réalisé à une température comprise entre 40°C et 70°C, pendant une durée comprise entre 2 heures et 8 heures.

7. Procédé selon l'une quelconque des revendications précédentes, dans lequel le précurseur d'argent est choisi parmi l'oxyde d'argent et le nitrate d'argent.

8. Procédé selon l'une quelconque des revendications précédentes, dans lequel le composé ajouté dans l'étape (b) à la solution stabilisante préparée dans l'étape (a) est un poly(éthylène-acétate de vinyle) ayant la formule (I):
(C₂H₄)ₐ(C₄H₆O₂)_{b} (I)
dans laquelle:
- a est un nombre entier compris entre 10 et 5000,
et
- b est un nombre entier compris entre 100 et 20000.

9. Procédé selon l'une quelconque des revendications 1 à 7, dans lequel le composé ajouté dans l'étape (b) à la solution stabilisante préparée dans l'étape (a) est un polypropylène ayant la formule (II):
(C₃H₆)ᵣ (II)
dans laquelle r est un nombre entier compris entre 20 et 100000.
